# EUROPÄISCHE PATENTSCHRIFT

(11) **EP 3 609 672 B1**
(45) Veröffentlichungstag und Bekanntmachung des Hinweises auf die Patenterteilung: **14.06.2023**
(21) Anmeldenummer: 18719774.4
(22) Anmeldetag: 10.04.2018
(51) Int. Cl.: B29C 45/26, B29C 45/00, F16L 37/084, B29K 77/00, B29K 105/12, B29L 31/36, F16L 37/088

(54) **KUNSTSTOFF-STECKVERBINDER UND VERFAHREN ZU DESSEN HERSTELLUNG**
PLASTIC PLUG-IN CONNECTOR AND METHOD FOR PRODUCING IT
CONNECTEUR ENFICHABLE EN MATIÈRE PLASTIQUE ET PROCÉDÉ DE FABRICATION ASSOCIÉ

(30) Priorität: 11.04.2017 DE 102017107756
(43) Veröffentlichungstag der Anmeldung: 19.02.2020
(73) Patentinhaber: Voss Automotive GmbH, 51688 Wipperfürth (DE)
(72) Erfinder: SIEPER, Günter, 42853 Remscheid (DE); BERGER, Markus, 51688 Wipperfürth (DE); HAGEN, Harald, 51688 Wipperfürth (DE); SEINSCHE, Fabian, 51674 Wiehl (DE)
(74) Vertreter: Dr. Solf & Zapf Patent- und Rechtsanwalts PartG mbB
(86) Internationale Anmeldenummer: PCT/EP2018/059142
(87) Internationale Veröffentlichungsnummer: WO 2018/189167

(56) Entgegenhaltungen:
- EP-A1- 0 337 128
- WO-A1-2008/090424
- WO-A1-2013/092234
- WO-A1-2015/158805
- DE-A1-102005 052 825
- DE-A1-102008 006 376
- DE-A1-102008 018 514
- DE-A1-102013 010 840
- US-A- 5 759 647
- US-A1- 2007 003 662
- US-A1- 2014 217 727
- DATABASE WPI Week 200859 Thomson Scientific, London, GB; AN 2008-K05052 XP002782934, -& NL 1 032 894 C2 (HEINEKEN SUPPLY CHAIN BV) 20. Mai 2008 (2008-05-20)
- DATABASE WPI Week 199802 Thomson Scientific, London, GB; AN 1998-013460 XP002782935, -& JP H09 277313 A (MITSUI CHEM INC) 28. Oktober 1997 (1997-10-28)

## Beschreibung

Die Erfindung betrifft einen Steckverbinder gemäß dem Oberbegriff des Anspruchs 1.

Des Weiteren betrifft die Erfindung ein Verfahren zur Herstellung eines derartigen Steckverbinders, wobei der Steckverbinder als Formteil durch Spritzgießen aus einem plastifizierten Kunststoff hergestellt wird, der als polymere Masse unter Druck radial nach innen in eine durch eine Innenwandung eines Formwerkzeugs gebildete Kavität eingespritzt wird, wobei in der Kavität zur Bildung eines Innenkanals des Steckverbinders ein einziger zylindrischer rotationssymmetrischer Kern angeordnet ist, um den herum die polymere Masse in umfangsgemäßer und in axialer Richtung fließt, bis die Kavität vollständig gefüllt ist, wonach die polymere Masse, gegebenenfalls unter Aufbringung eines Nachdrucks, bis zum Erstarren abkühlt, und wobei danach das Formteil aus dem Formwerkzeug entformt wird.

Ein derartiger Kunststoff-Steckverbinder kann als Steckerteil in einer Steckkupplung für Druckmittel-Leitungen eingesetzt werden, die zwei Kupplungsteile umfasst, und zwar ein Gehäuseteil und ein Steckerteil, wobei das Steckerteil mit einem Steckerschaft bzw. Steckabschnitt umfangsgemäß abgedichtet in eine Aufnahmeöffnung des Gehäuseteils einsteckbar und über eine Verriegelungseinrichtung gegen Lösen arretierbar ist.

Aus der EP 0 337 128 A1 ist ein gattungsgemäßer Steckverbinder bekannt. Dieser Steckverbinder weist einseitig einen einsteckbaren Zapfen und gegenüberliegend einen Einschlagdorn auf. Der Zapfen und der Einschlagdorn sind dabei im Übergang über einen ringförmigen Ansatz miteinander verbunden.

Eine weitere Steckkupplung kann insbesondere in Kraftfahrzeug-Bremssystemen, hauptsächlich bei LKW-Luftdruckbremsanlagen, eingesetzt werden und ist exemplarisch in der WO 2010/006838 A1 beschrieben. Das Spezifikum dieser bekannten, praxisbewährten Steckkupplung besteht darin, dass in ihr ein Doppelrastelement für die Kupplungsteile vorgesehen ist, das in der Montagestellung in einer, durch eine spezielle Umfangsnut gebildeten Rastausnehmung des Steckerteiles gehalten wird. Für den erfindungsgemäßen Steckverbinder ist diese spezielle Ausbildung der Umfangsnut allerdings kein wesentliches Merkmal, er kann auch in anderen Stecksystemen Anwendung finden, beispielsweise in solchen, wie sie in der WO 2010/006838 A1 als Stand der Technik beschrieben sind.

Im Rahmen der Anmeldung wird der Ausdruck "Steckverbinder" synonym mit den Begriffen "Stecker" und "Steckverbinderteil" (englisch: "male part") verwendet, während das Gegenstück dazu das "Gehäuseteil" ist, welches auch als "Steckmuffe" oder "Muffenteil" (englisch: "female part") bezeichnet werden kann. "Verbinder" oder "Kupplungsteile" werden als übergeordnete Begriffe verwendet, wobei die Kupplungsteile - Steckverbinder und Gehäuseteil - zusammen die Steckkupplung bilden, indem der Stecker in die Muffe eingeführt wird.

Insbesondere bei Schnellverbindern ist es dabei notwendig, dass für den Steckverbinder eine bestimmte axiale Geradheit eingehalten wird; d. h. der Steckverbinder darf nicht axial gekrümmt sein, damit eine problemlose Montage gewährleistet ist. Dementsprechend muss das Verfahren zu Herstellung des Kunststoff-Steckverbinders gestaltet sein. Es darf dabei kein zu starker Verzug des als Spritzgieß-Formteil ausgebildeten Steckverbinders eintreten. Ein solcher, allerdings nie hundertprozentig vermeidbarer Verzug muss also bei Spritzgießen minimiert werden.

Die Geradheit des Steckverbinders ist deshalb besonders wichtig, weil sie sich insbesondere auf die aufzuwendenden Steckkräfte bei der Herstellung der Steckkupplung, auf die automatische Montierbarkeit und auf die sich nach der Montage einstellende Dichtigkeit sowie weitere Eigenschaften auswirken kann. Bei zu starker axialer Krümmung könnte es beispielsweise zu einer nur einseitigen Verpressung von vorzugsweise auf dem Steckerteil montierten Dichtringen kommen, was im Betriebszustand eine Leckage nach sich ziehen könnte.

Beim Kunststoff-Spritzgießen wird eine - gegebenenfalls Füllstoffe enthaltende - plastifizierte polymere Masse unter Bildung eines Formteils durch eine Einspritzöffnung eines Formwerkzeugs in mindestens eine Kavität des Formwerkzeugs eingespritzt. Nach einem Erstarren der polymeren Masse wird das Formteil aus dem Werkzeug entformt. Bei dem oben genannten Kunststoff-Steckverbinder handelt es sich um ein nach einem derartigen Verfahren herstellbares Formteil. Unter "aus Kunststoff bestehend" wird dabei auch subsumiert, dass der Kunststoff weitere Bestandteile, wie Füllermaterialien, enthalten kann.

Das Spritzgießen (engl.: "injection molding") ist ein bekanntes, beispielsweise für Kunststoffe eingesetztes, diskontinuierliches Urformverfahren. Das Spritzgießen gestattet es, industriell unmittelbar einsetzbare Formteile in großer Stückzahl und mit hoher Genauigkeit herstellen. Dazu wird in einer Spritzeinheit einer Spritzgießmaschine der jeweilige Werkstoff zu einer fließfähigen Formmasse plastifiziert und durch eine Düse in das Spritzgießwerkzeug eingespritzt. Moderne Spritzgießmaschinen arbeiten mit einer Schnecke, die gleichzeitig plastifiziert, fördert und über Zuführungskanäle in das Werkzeug einspritzt. In der Kavität bzw. Formhöhlung des Werkzeugs kommt es zu einem Erstarren der polymeren Masse. Eine beim Erstarren entstehende Volumenschwindung kann grundsätzlich -jedoch nur bis zu einem bestimmten Maß - durch einen vor der Entnahme aufgebrachten Nachdruck ausgeglichen werden. Diese Unzulänglichkeit kann bei einem Kunststoff-Steckverbinder einen Negativfaktor für die angestrebte Geradheit darstellen. Wenn der Spritzling aus dem Werkzeug entformt wird, weist er in der Regel einen als Anguss bezeichneten Teil auf, der nicht zum herzustellenden Formteil gehört und nachträglich entfernt werden muss. Dieser Anguss entsteht durch die in den Zuführungskanälen zur Gießform erstarrte Masse und sollte zur Vermeidung von Abfall ein möglichst geringes Gewicht haben.

Das nach dem Plastifizieren des Kunststoffs erfolgende Einspritzen, das Nachdrücken und das Entformen bestimmen eine sogenannte Zykluszeit der Herstellung des Formteils, die im Sinne einer hohen Produktivität der Fertigung klein gehalten werden sollte.

Durch Spritzgießen können Thermoplaste, Duroplaste und Elastomere verarbeitet werden. Es ist auch bekannt, beim Spritzgießen von Thermoplasten insbesondere Glasfasern als Füllstoffe enthaltende Massen einzusetzen, wodurch vergleichsweise höherfeste Formteile hergestellt werden können. Die Massetemperatur beträgt beim Spritzgießen etwa 100 °C bis 350 °C, der Spritzdruck etwa 400 bar bis 1600 bar und die Werkzeugtemperatur etwa 40 °C bis 160 °C. Bei der Verarbeitung von Thermoplasten ist die Schnecke relativ warm, um das thermoplastische Material zu schmelzen. Das Werkzeug hingegen ist relativ kalt, um das gerade entstandene Formteil abzukühlen. Bei der Verarbeitung von Duroplasten muss die Temperatur der Plastifiziereinheit dem Fließ-Härtungsverhalten angepasst werden und liegt daher im Allgemeinen niedriger als bei Thermoplasten, während das Werkzeug heißer gehalten werden muss als die Spritzeinheit, damit die Masse dort aushärten kann. Ähnliches gilt bei der Verarbeitung von Elastomeren.

Im Gegensatz zum Kalandrieren, mit dem in der Regel nur ebene Schichten uniformer Dicke erzeugt werden, bestimmt beim Spritzgießen der Hohlraum des Werkzeugs, die sogenannte Kavität, die Form und die Oberflächenstruktur des fertigen Teils. In der Innenwandung des Formwerkzeugs ist die Negativkontur des Formteils, also des Kunststoff-Steckverbinders der eingangs genannten Art, ausgebildet. Durch eingelegte Kerne, wie vorzugsweise durch einen zylindrischen Kern, können Hohlräume im Formteil, wie z. B. der Innenkanal des Steckverbinders, gebildet werden.

Der Kunststoff-Steckverbinder kann durch das Spritzgießen in einem Arbeitsgang hergestellt werden. Dazu erfolgt das Einspritzen der plastifizierten polymeren Masse in die Kavität bekanntermaßen unter Einsatz sogenannter offener Düsen durch mindestens zwei umfangsgemäß einander diametral gegenüber liegende Einspritzöffnungen, wobei die Masse unter Ringbildung einen inneren Kern des Werkzeugs umströmt und jeweils in der Mitte zwischen den Einspritzöffnungen zusammenfließt. An diesen Stellen entstehen Bindenähte, die in der Regel eine geringere Festigkeit aufweisen als der übrige Körper des Formteils.

Der Erfindung liegt die Aufgabe zugrunde, einen Kunststoff-Steckverbinder der eingangs genannten Art sowie ein Verfahren der eingangs genannten Art zu schaffen, wodurch bei Einhaltung einer geforderten axialen Geradheit des Steckverbinders eine hinsichtlich Materialökonomie und Produktivität verbesserte Herstellung des Steckverbinders ermöglicht wird.

Diese Aufgabe wird für den Steckverbinder erfindungsgemäß mit einem Formteil nach Anspruch 1 gelöst.

Mindestens einer der Verbindungsabschnitte ist ein Steckabschnitt, wobei der andere Verbindungsabschnitt ebenfalls als Steckabschnitt oder als Anschlussabschnitt mit einem Dornteil oder als Schraubteil mit einem Innen- oder Außengewinde ausgebildet ist. Alternativ dazu ist mindestens einer der Verbindungsabschnitte ein Anschlussabschnitt, wobei dann insbesondere der andere Verbindungsabschnitt ebenfalls als Anschlussabschnitt mit einem Dornteil oder als Schraubteil mit einem Innen- oder Außengewinde oder als Steckabschnitt ausgebildet ist.

Für das Verfahren wird diese Aufgabe erfindungsgemäß mit einem Verfahren nach Anspruch 6 gelöst.

Solchermaßen wird - bei nur einseitiger Einspritzung - durch die erfindungsgemäß hergestellte Massenverteilung und Geometrie des Spritzgussteiles mit Vorteil erreicht, dass die Füllung, und insbesondere der sich danach bei der Abkühlung anschließende Verzug, derart beeinflusst werden können, dass ein, zumindest in Teilbereichen, wie insbesondere in den Hauptfunktionsbereichen, des erfindungsgemäßen Steckerteils ein für eine fluidische Steckverbindung optimal gerades Bauteil entsteht.

Erfindungsgemäß wird die polymere Masse dabei in einen mittleren Bereich der Kavität des Formwerkzeugs eingespritzt, so dass das Formteil die Anspritzstelle des Kunststoffs im Mittelabschnitt aufweist. Auch die Ausbildung der radial asymmetrischen Masseverteilung, durch die Masseanhäufungen entstehen, kann vorzugsweise in diesem Bereich erfolgen. Unter dem mittleren Bereich der Kavität des Formwerkzeugs wird dabei der Bereich der Kavität verstanden, welcher zur Ausbildung des zwischen den beiden Verbindungsabschnitten liegenden Mittelabschnitts des Steckverbinders bestimmt ist. Erfindungsgemäß ist/sind ein oder mehr Befüllungs-Steuerungselement(e) in einem mittleren Bereich der Kavität des Formwerkzeugs angeordnet.

Grundsätzlich beginnt die polymere Masse zunächst die Kavität zu füllen, indem sie aus der Einspritzöffnung heraus gleichzeitig beidseitig mit gleicher Geschwindigkeit in axialer Richtung des Formteils und beidseitig mit gleicher Geschwindigkeit in umfangsgemäßer Richtung um den Kern fließt. Eine solche Füllung der Kavität wird als Quellfluss bezeichnet. Die Masseströmung ist dabei auch bei hohen Einspritzgeschwindigkeiten laminar. Typischerweise tritt eine Haftung der Masse an der Werkzeugwandung auf, die bedarfsweise allerdings durch eine Antihaft-Beschichtung gemindert werden kann. Daraus resultiert der Quellfluss, welcher auch als Quellströmung bezeichnet wird. In einem Strom der sich ausbreitenden Masse ist dabei die Geschwindigkeit in der Mitte des Querschnitts am größten. Hier wird immer heiße Masse nachgeliefert.

Mittels des Befüllungs-Steuerungselements, welches im Hinblick auf seine Funktion, dass es bei der Befüllung der Kavität den Fluss der polymeren Masse in axialer Richtung hemmt, auch als Fließbremse bezeichnet werden könnte, oder auch mittels zweier oder mehrerer solcher Elemente, kann mit Vorteil erreicht werden, dass die polymere Masse sich bei der Befüllung der Kavität in umfangsgemäßer Richtung mit höherer Geschwindigkeit ausbreitet als in axialer Richtung.

Die Befüllungs-Steuerungselemente können dabei durch in der Kavität umlaufende oder nur einseitige, symmetrische oder asymmetrische, Vorsprünge oder Rücksprünge in der Innenwandung des Werkzeugs gebildet sein. Da bei der Befüllung der Kavität die Masse eine unter Druck frei fließende viskose Masse ist, bewirkt ein durch die Befüllungs-Steuerungselemente verengter Querschnitt keine Vergrößerung der Strömungsgeschwindigkeit, sondern eine Kanalisierung, also eine Lenkung, des Massestroms. Die Befüllungs-Steuerungselemente könnten somit auch als Fluss-Lenkelemente bezeichnet werden. Der Quellfluss in axialer Richtung wird dabei verzögert. Ebenso wirkt auch eine, insbesondere unmittelbar neben der Einspritzstelle angeordnete, den Ringquerschnitt vergrößernde, rechteckige Querschnittsausbildung. Die Masse füllt dort zunächst die Ecken aus, bevor sie in axialer Richtung weiterströmt. Dadurch kann mit Vorteil im Querschnitt des Formteils ein schneller Ringschluss der Schmelzmasse erreicht und auf eine optimale Ausbildung der sich ausbildenden Bindenähte, beispielsweise durch Verschiebung und/oder Verkürzung derselben, Einfluss genommen werden.

Es hat sich hierbei überraschenderweise herausgestellt, dass die erfindungsgemäß eingesetzten Maßnahmen, wie die Verwendung von einer oder mehr Masseanhäufungen, welche nach herrschender Meinung der Fachwelt - aus eben dem Grund, dass Masseanhäufungen zu erhöhtem Verzug führen - grundsätzlich bei der Spritztechnik vermieden werden sollen, sich sogar positiv auf die Geradheit des Teiles auswirken können. Sie können - sozusagen als "Gegengewicht" für eine, bei der Abkühlung an anderer Stelle, z. B. auf der diametral gegenüberliegenden Seite des Querschnitts des Formteils, spontan auftretende Masseschrumpfung - die Gesamtschrumpfung egalisieren und dadurch einen einseitig auftretenden Verzug kompensieren.

In besonders bevorzugter Ausführung des erfindungsgemäßen Verfahrens kann zum Einspritzen der polymeren Masse eine Nadelverschluss-Düse eingesetzt werden. Dabei handelt es sich um eine Heißkanaldüse, mittels derer direkt auf dem Kunststoff-Verbinder angespritzt werden kann. Der erfindungsgemäße Steckverbinder kann dadurch mit Vorteil völlig angusslos hergestellt werden. Bei der Nadelverschluss-Düse wird nach dem Einspritzen der Kunststoffmasse der Anschnittdurchmesser durch eine Stahlnadel verschlossen, der Spritzrest wird in das Kunststoffteil gedrückt. Die Nadel kann genau bündig mit der Oberfläche des Kunststoffteiles ausgerichtet werden. Am Teil sieht man danach nur noch eine kleine, jedoch noch erkennbare runde Markierung. Diese kann wahlweise auch erhaben oder geringfügig versenkt gegenüber der Oberfläche ausgeführt werden. Bei offenen Heißkanaldüsen bleibt stattdessen - selbst dann, wenn keine Zuführungskanäle vorhanden sind, - nach dem Spritzen immer ein kleiner Spritzrest am Abrisspunkt bestehen. In jedem Fall ist eine Anspritzstelle auch dadurch zu identifizieren, dass Fasern in der erstarrten polymeren Masse - sofern vorhanden - im Bereich der Anspritzstellen weniger geordnet vorliegen als in anderen Bereichen.

Obwohl grundsätzlich auch, wenngleich mit den eingangs genannten Modifizierungen des Verfahrens eine Fertigung aus einem duroplastischen Kunststoff möglich ist, wird der erfindungsgemäße Verbinder doch in besonders bevorzugter Ausführung aus einem thermoplastischen Werkstoff, wie aus Polyamid, insbesondere aus dem Werkstoff PA 6, PA11, PA12 oder PA 66, hergestellt. Die polymere Masse ist dann in jedem Fall eine Schmelze. Ein Füllstoffgehalt, insbesondere ein Fasergehalt, kann dabei im Bereich von 0 bis 60 Prozent, vorzugsweise im Bereich von 20 bis 40 Prozent, bezogen auf die Gesamtmasse, liegen. Die Fasern können - insbesondere in einer Ausführung als Glasfasern - eine Länge im Bereich von 0,1 mm bis 10 mm, vorzugsweise im Bereich von 0,2 mm bis 0,5 mm, und einen mittleren Durchmesser im Bereich von etwa 3 µm bis 35 µm, vorzugsweise im Bereich von 5 µm bis 20 µm, aufweisen. Die Viskosität von plastifizierten thermoplastischen Kunststoffen ist unterschiedlich. Im Gegensatz zu zähfließenden Kunststoffen mit niedrigem Schmelzpunkt, wie Polyethylen, ist bei Spritzgussmassen, deren Schmelztemperatur sehr hoch ist, wie beispielsweise bei den genannten Polyamiden, die Schmelze dünnflüssig und tritt aus, sobald der Einspritz-Zylinder innerhalb des Spritzzyklus von der Spritzgussform abgehoben wird.

Für derartige niedrigviskose Kunststoffschmelzen ist der Einsatz einer Nadelverschluss-Düse besonders geeignet, da sie die Kunststoffschmelze nur während des unter dem hohen Spritzdruck erfolgenden Einspritzvorganges durchlässt, während bei abgehobenem Spritz-Zylinder das Austreten der Schmelze aus der Düse verhindert wird. Die Austrittsöffnung, in der Regel eine Bohrung in der Düsenspitze, wird im Innenraum der Düse durch eine Verschlussnadel abgedichtet, welche in einer zylindrischen, druckdichten Führung unter Federdruck steht. Bei einer anderen Konstruktion wird der Druck auf die Verschlussnadel über Hebel außerhalb der Düse hydraulisch oder pneumatisch bewirkt. Nadelverschluss-Düsen garantieren einen sauberen, kontinuierlichen Spritzguss-Prozess. Ein Heraustropfen der Kunststoffmasse wird durch das gezielte Schließen vermieden. Ebenso wird auch ein störendes und die Qualität nachteilhaft beeinflussendes Fadenziehen unterbunden. Insgesamt kann eine prozesssichere und störungsfreie sowie - aufgrund kürzerer Zykluszeiten im Vergleich mit offenen Düsen - hocheffiziente Produktion gewährleistet werden.

Weitere vorteilhafte Ausgestaltungen der Erfindung ergeben sich aus der folgenden Figurenbeschreibung und den abhängigen Ansprüchen.

Es zeigen:
- Fig. 1a: eine schematische Darstellung zur Veranschaulichung des bekannten Verfahrens zur Herstellung eines bekannten Steckverbinders,
- Fig. 1b: eine perspektivische Darstellung zur Veranschaulichung des bekannten Verfahrens zur Herstellung eines bekannten Steckverbinders,
- Fig. 1c: einen Schnitt durch eine bei dem bekannten Verfahren zur Herstellung eines bekannten Steckverbinders eingesetzte Düse,
- Fig. 2a: in Analogie zu Fig. 1a, eine schematische Darstellung zur Veranschaulichung des erfindungsgemäßen Verfahrens zur Herstellung eines erfindungsgemäßen Steckverbinders,
- Fig. 2b: in Analogie zu Fig. 1b, eine perspektivische Darstellung zur Veranschaulichung des erfindungsgemäßen Verfahrens zur Herstellung eines erfindungsgemäßen Steckverbinders,
- Fig. 2c: in Analogie zu Fig. 1c, einen Schnitt durch eine bei dem erfindungsgemäßen Verfahren zur Herstellung eines erfindungsgemäßen Steckverbinders eingesetzte Düse,
- Fig. 3a: eine Aufsicht auf eine bevorzugte Ausführungsform eines erfindungsgemäßen Steckverbinders,
- Fig. 3b: eine Aufsicht auf die in Fig. 3a dargestellte bevorzugte Ausführungsform eines erfindungsgemäßen Steckverbinders, jedoch gegenüber der Darstellung in Fig. 3a um 180° um seine Längsachse gedreht und in verkleinertem Maßstab,
- Fig. 4a: einen Querschnitt durch die in Fig. 3a dargestellte bevorzugte Ausführungsform eines erfindungsgemäßen Steckverbinders in der Schnittebene A-A in Fig. 3a,
- Fig. 4b: einen Querschnitt durch die in Fig. 3a dargestellte bevorzugte Ausführungsform eines erfindungsgemäßen Steckverbinders in der Schnittebene B-B in Fig. 3a,
- Fig. 4c: einen Querschnitt durch die in Fig. 3a dargestellte bevorzugte Ausführungsform eines erfindungsgemäßen Steckverbinders in der Schnittebene C-C in Fig. 3a,
- Fig. 4d: einen Querschnitt durch die in Fig. 3a dargestellte bevorzugte Ausführungsform eines erfindungsgemäßen Steckverbinders in der Schnittebene D-D in Fig. 3a,
- Fig. 4e: einen Querschnitt durch die in Fig. 3a dargestellte bevorzugte Ausführungsform eines erfindungsgemäßen Steckverbinders in der Schnittebene E-E in Fig. 3a,
- Fig. 4f: einen Querschnitt durch die in Fig. 3a dargestellte bevorzugte Ausführungsform eines erfindungsgemäßen Steckverbinders in der Schnittebene F-F in Fig. 3a,
- Fig. 4g: einen Querschnitt durch die in Fig. 3a dargestellte bevorzugte Ausführungsform eines erfindungsgemäßen Steckverbinders in der Schnittebene G-G in Fig. 3a,
- Fig. 5: eine Darstellung zur Veranschaulichung eines Maßes für die Geradheit eines erfindungsgemäßen Steckverbinders,
- Fig. 6: im Längsschnitt, ein in dem erfindungsgemäßen Verfahren zur Herstellung eines erfindungsgemäßen Steckverbinders einsetzbares geöffnetes Formwerkzeug einschließlich eines darin eingelegten Kernes,
- Fig. 7a: eine schematische Darstellung zur Veranschaulichung einer ersten Phase bei der Füllung der Kavität eines Formwerkzeugs in dem erfindungsgemäßen Verfahren zur Herstellung eines erfindungsgemäßen Steckverbinders,
- Fig. 7b: eine schematische Darstellung zur Veranschaulichung einer zweiten Phase bei der Füllung der Kavität eines Formwerkzeugs in dem erfindungsgemäßen Verfahren zur Herstellung eines erfindungsgemäßen Steckverbinders,
- Fig. 7c: eine schematische Darstellung zur Veranschaulichung einer dritten Phase bei der Füllung der Kavität eines Formwerkzeugs in dem erfindungsgemäßen Verfahren zur Herstellung eines erfindungsgemäßen Steckverbinders,
- Fig. 7d: eine schematische Darstellung zur Veranschaulichung einer vierten Phase bei der Füllung der Kavität eines Formwerkzeugs in dem erfindungsgemäßen Verfahren zur Herstellung eines erfindungsgemäßen Steckverbinders,

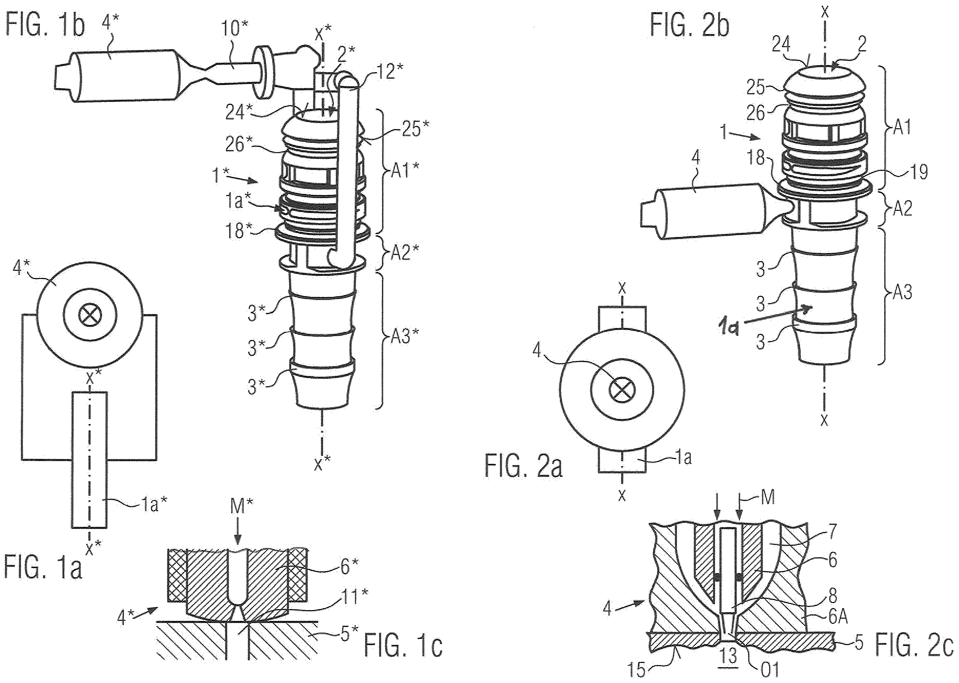

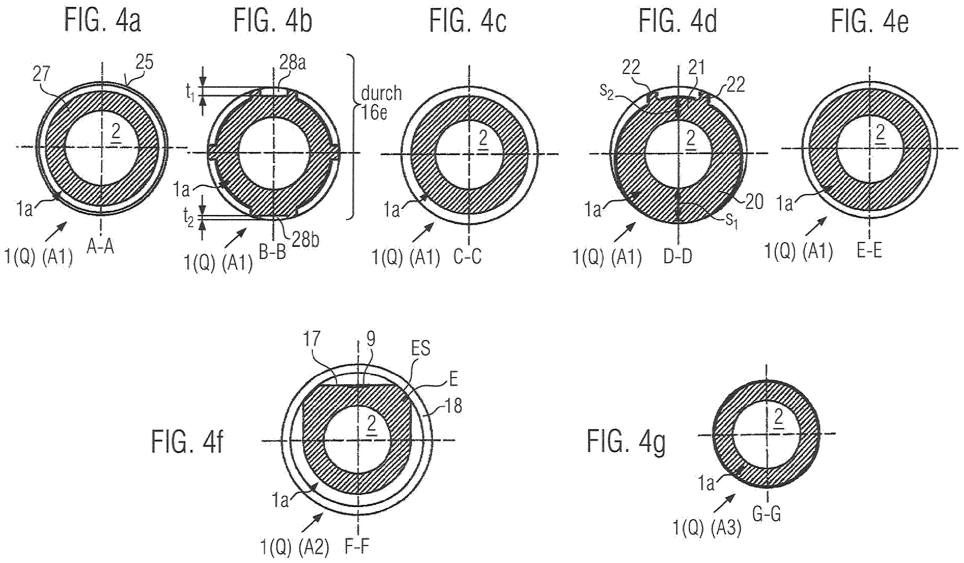

In den verschiedenen Figuren der Zeichnung sind gleiche Teile stets mit denselben Bezugszeichen versehen und werden daher in der Regel nur einmal beschrieben. Wie in Fig. 1a bis 1c und Fig. 2a bis 2c gezeigt, bezieht sich die Erfindung auf einen Steckverbinder 1, der als ein aus Kunststoff bestehendes, durch Spritzgießen hergestelltes Formteil 1a ausgebildet ist und einen Innenkanal 2 für ein Fluid sowie einen mindestens teilweise ringförmigen Querschnitt Q aufweist. Verschiedene Schnitte durch den Querschnitt sind in Fig. 4a bis 4g dargestellt, was durch das in Klammern gesetzte Bezugszeichen "Q" hinter dem Bezugszeichen "1" für den Steckverbinder zum Ausdruck kommt.

Der erfindungsgemäße Steckverbinder 1 weist - wie ein Steckverbinder 1* nach dem Stand der Technik - drei axial hintereinander liegenden Hauptabschnitte A1, A2, A3 auf, und zwar einen Mittelabschnitt A2 und zwei beidseitig an den Mittelabschnitt A2 angrenzende Verbindungsabschnitte A1, A3, von denen, wie exemplarisch dargestellt, ein Verbindungsabschnitt A1 ein Steckabschnitt A1 und der andere Verbindungsabschnitt A2 ein Anschlussabschnitt A2 ist. Da die entsprechenden Hauptabschnitte A1, A2, A3 jeweils gleichzeitig Mittelabschnitt A2, Verbindungsabschnitte A1, A3 sowie Steckabschnitt A1 und Anschlussabschnitt A3 sind, wird zur Veranschaulichung dieser Identität für sie jeweils auch nur ein Bezugszeichen verwendet. Obwohl der Mittelabschnitt A2 nicht funktionslos ist, indem er die beiden Verbindungsabschnitte A1, A3 zusammenhält, werden im Folgenden nur die Verbindungsabschnitte A1, A3 im Hinblick auf ihre Hauptfunktion des Verbindens auch als Funktionsabschnitte bezeichnet. In den Schnittbildern - Fig. 4a bis 4g ist durch weitere in Klammern gesetzte Bezugszeichen "A1", "A2", "A3", hinter dem Bezugszeichen "1" angegeben, in welchem der Abschnitte der jeweilige Schnitt liegt.

Der Steckabschnitt A1 ist als Verbindungsabschnitt A1 dazu bestimmt, mit einem nicht dargestellten Muffenteil eine Steckverbindung auszubilden. Der Anschlussabschnitt A3 ist als Verbindungsabschnitt A3 dazu bestimmt, mit einer nicht dargestellten Leitung eine Verbindung auszubilden. Der Anschlussabschnitt A3 ist in der dargestellten Ausführung als Dornteil ausgebildet und weist daher umlaufende Haltekanten 3 zum Aufdornen einer Schlauchleitung auf.

Der Anschlussabschnitt A3 könnte aber auch in geeigneter Weise anders ausgebildet sein, z. B. exakt hohlzylindrisch und aus einem Material, das für eine Laserverschweißung mit einer, vorzugsweise starren, Kunststoffleitung geeignet ist.

Insbesondere für die Funktionsabschnitte A1, A3 ist es wichtig, dass sie gerade sind, wobei allerdings im Falle eines als Dornteil ausgebildeten Anschlussabschnittes A3 größere Abweichungen von der Geradheit zugelassen werden können als bei einem laserverschweißbaren Anschlussabschnitt A3.

Durch einen Vergleich der Fig. 1a bis 1c, die das bekannte Verfahren zur Herstellung eines bekannten Steckverbinders 1* veranschaulichen, mit den Fig. 2a bis 2c, die das erfindungsgemäße Verfahren zur Herstellung eines erfindungsgemäßen Steckverbinders 1 beispielhaft demonstrieren, werden die nachfolgend beschriebenen Unterschiede deutlich. Zur Unterscheidung des bekannten Steckverbinders 1* und des bekannten Verfahrens von dem erfindungsgemäßen Steckverbinder 1 und dem erfindungsgemäßen Verfahren sind in Fig. 1a bis 1c alle Bezugszeichen zusätzlich mit einem Stern (*) versehen. Die im bekannten Steckverbinder 1* den Teilen des erfindungsgemäßen Steckverbinders 1 entsprechenden Teile werden daher im Folgenden nicht alle einzeln beschrieben.

Der bekannte Kunststoff-Steckverbinder 1* wird durch Spritzgießen hergestellt, wobei das Einspritzen einer plastifizierten polymeren Masse M* in die Kavität eines in Fig. 1a und 1b (nicht dargestellten Werkzeugs) unter Einsatz einer offenen Düse 4* erfolgt. Eine solche Düse 4* ist exemplarisch in Fig. 1c genauer dargestellt. Das Bezugszeichen 5* bezeichnet dabei das Werkzeug und das Bezugszeichen 6* den Düsenkörper.

Erfindungsgemäß erfolgt stattdessen das Einspritzen der plastifizierten polymeren Masse M in die Kavität bevorzugt unter Einsatz einer Nadelverschluss-Düse 4, bei der es sich - wie bei der offenen Düse 4* - um eine sogenannte zur Verarbeitung von Thermoplasten bestimmte Heißkanaldüse handelt. Eine solche Düse 4 ist exemplarisch in Fig. 2c genauer dargestellt. Das Bezugszeichen 6 bezeichnet dabei einen Düsenkern, das Bezugszeichen 7 bezeichnet eine Isolierschicht und das Bezugszeichen 8 eine Verschlussnadel. Alle diese Teile befinden sich im Düsenkörper 6A. Das Werkzeug ist durch das Bezugszeichen 5 gekennzeichnet.

Während des unter dem Spritzdruck erfolgenden Einspritzvorganges lässt die Nadelverschluss-Düse 4 die polymere Masse M durch, wobei dann aber das Austreten der Masse M aus der Düse 4 verhindert wird, wenn ihr Düsenkörper 6A abhebt, weil die Verschlussnadel 8 in die Einspritzöffnung O1 wandert und diese abdichtet.

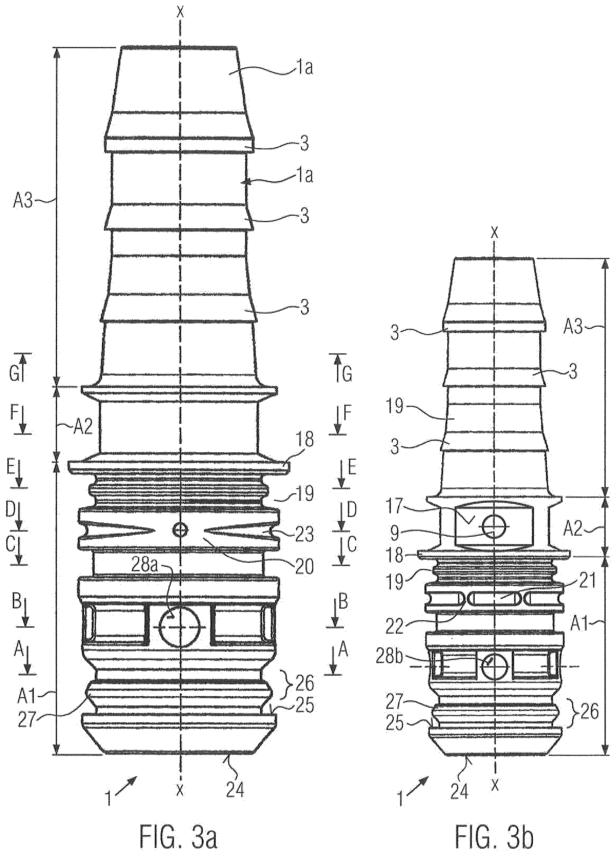

Außerdem wird nach dem Einspritzen der viskos fließenden Kunststoffmasse M der Innendurchmesser der Düse 4 durch die Nadel 8 verschlossen, und ein Spritzrest wird danach in das Formteil 1a gedrückt. Das führt dazu, dass man am Formteil 1a nach dem Spritzguss nur noch eine runde Markierung sieht, welche die Anspritzstelle 9 sichtbar macht, wie dies Fig. 3b und Fig. 4f zu entnehmen ist.

Bekanntermaßen erfolgt nach dem Stand der Technik die Einspritzung durch mindestens zwei umfangsgemäß einander diametral gegenüber liegende Einspritzöffnungen, wobei die Masse M* nach dem Passieren der Düse 4* durch einen Unterverteiler 10* geleitet wird, wo eine Aufteilung in zwei Teilströme erfolgt. Sie durchströmt im Werkzeug 5* ausgebildete, in Fig. 1c mit dem Bezugszeichen "11*" bezeichnete Kanäle und gelangt dann in einen um einen inneren Kern ausgebildeten Ringraum, wo sie jeweils in der Mitte zwischen den Einspritzöffnungen zusammenfließt und das Formteil 1a* bildet, welches an den Stellen des Zusammenflusses der Masse M* Bindenähte aufweist. Aufgrund dieser symmetrischen Ausbildung führt das Schrumpfen des Formteils 1a* bei der sich anschließenden Abkühlung vorteilhafterweise zu einem geraden Steckverbinder 1*. Nachteilig ist jedoch der sich in den Kanälen 11* des Werkzeugs 5* bildende Anguss 12*, der sogar ein Drittel der Gesamtmasse des Spritzlings ausmachen kann und anschließend vom Formteil 1a* abgetrennt und als Abfall entsorgt werden muss, sofern kein unmittelbares Recycling möglich ist. Nachteilig ist auch die Ausbildung von zwei Bindenähten, da jede Bindenaht die Festigkeit herabsetzt.

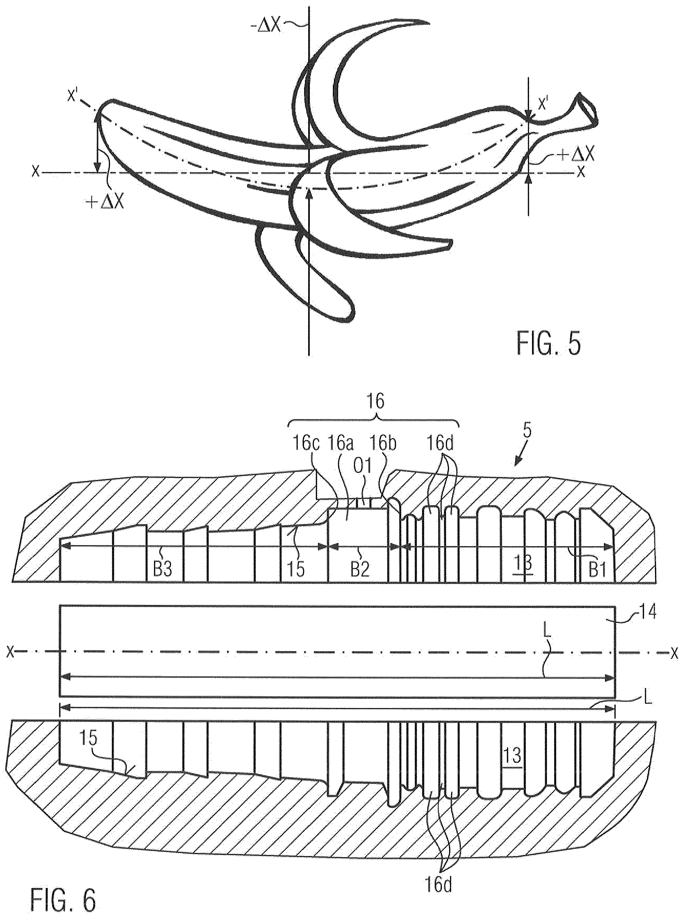

Erfindungsgemäß erfolgt die Einspritzung ausschließlich durch eine einzige Einspritzöffnung O1, wobei die Masse M nach dem Passieren der Düse 4 direkt in die Kavität 13, also in den um den inneren Kern 14 (siehe Fig. 6) durch die Innenwandung 15 der Kavität ausgebildeten Ringraum gelangt, wo sie diametral gegenüber der Einspritzöffnung O1 zusammenfließt und jeweils das Formteil 1a bildet, welches an der Stelle des Zusammenflusses vorteilhafterweise nur eine einzige Bindenaht aufweist. Vorteilhaft ist auch die Vermeidung des bekannten Angusses 12*, was eine enorme Materialeinsparung bedeutet. Nachteilig ist jedoch die mit der Asymmetrie verbundene Tendenz zu einer bananenförmigen Ausbildung des Formteils 1a nach dem Schrumpfen bei der sich anschließenden Abkühlung, wie dies durch Fig. 5 veranschaulicht wird. Zur Bildung des Innenkanals 2 des Steckverbinders 1 ist ein einziger zylindrischer rotationssymmetrischer Kern 14 in der Kavität angeordnet.

Durch ein ungleichmäßiges Schrumpfen auf der Einspritzseite und auf der gegenüberliegenden Seite kann es zu einer Krümmung der realen Achse X'-X' des Formteils 1a gegenüber der geforderten, völlig geradlinigen Achse X-X des Formteils 1a, also zu einem Verzug, kommen. Hierbei können über die Achslänge positive Abweichungen +ΔX und negative Abweichungen -ΔX auftreten. Als Maß für eine erreichte Geradheit wird dabei der größte Absolutwert ΔX aus allen positiven Abweichungen +ΔX und negativen Abweichungen -ΔX angesehen. Für den Wert der Abweichung von Geradheit wird ein Minimum gefordert.

Eine derartige bananenförmige Ausbildung, die in Fig. 5 übertrieben dargestellt ist, würde die Montage des Steckerteils 1 erschweren, wenn nicht völlig unmöglich machen. Allerdings kommt es mit Vorteil aufgrund der weiteren erfindungsgemäß vorgesehenen Merkmale nicht zu einer solchen funktionsstörenden Ausbildung.

Für den erfindungsgemäßen Steckverbinder 1 besteht dieses weitere Merkmal darin, dass in dem Formteil 1a in mindestens einem der Hauptabschnitte A1, A2, A3 eine umfangsgemäß radial asymmetrische Masseverteilung des Kunststoffs vorliegt, wie dies aus den Fig. 4b und 4d, am stärksten ausgebildet aber insbesondere aber aus Fig. 4f, hervorgeht. Dadurch kann sichergestellt werden, dass ein erfindungsgemäßer Steckverbinder 1 keine größere Achsabweichung ΔX im Formteil 1a aufweist, als es bei einem herkömmlichen Steckverbinder 1* der Fall ist.

Erfindungsgemäß weist das Formteil 1a seine Anspritzstelle 9 und die radial asymmetrische Masseverteilung des Kunststoffs zumindest im Mittelabschnitt A2 auf, wie dies Fig. 2b, und insbesondere Fig. 3b und 4f, zeigen.

Ein erfindungsgemäßer Steckverbinder 1 kann somit bevorzugt auch insgesamt - also über die ganze Länge L des Formteils 1a gesehen - eine radial asymmetrische Masseverteilung aufweisen. Der Masseschwerpunkt kann - wie dargestellt - insbesondere auf der Seite der Einspritzstelle 9 liegen. Es wäre aber auch möglich, dass er auf der der Seite der Einspritzstelle 9 gegenüberliegenden Seite oder auch um 90° versetzt zur Einspritzstelle 9 liegt.

Dazu kann in bevorzugter Ausbildung ein Formwerkzeug 5 eingesetzt werden, wie es - einschließlich eines darin einlegbaren Kerns 14 zur Bildung des Innenkanals 2 des Steckverbinders 1 - schematisiert in Fig. 6 exemplarisch gezeigt ist.

Erfindungsgemäß wird polymere Masse M in das Werkzeug 5 ausschließlich einseitig eingespritzt, wobei in mindestens einem Bereich B1, B2, B3 der axialen Länge L des Formwerkzeugs 5 an der Innenwandung 15 ein verallgemeinernd mit dem Bezugszeichen 16 bezeichnetes Befüllungs-Steuerungselement angeordnet ist, welches bei der Befüllung der Kavität 13 den Fluss der polymeren Masse M in axialer Richtung X-X hemmt und/oder umfangsgemäß um den Kern 14 herum die radial asymmetrische Verteilung der polymeren Masse M erzeugt.

Da die in Fig. 6 dargestellte Kavität 13 die Negativform des den Fig. 2b, 3a und 3b entnehmbaren erfindungsgemäßen Steckverbinders 1 ist, weist auch sie über die axiale Länge L der Kavität 13 hinweg entsprechend den drei axial hintereinanderliegenden Hauptabschnitten A1, A2, A3 des Steckverbinders 1 drei Hauptabschnitte B1, B2, B3 auf. Dies sind ein mittlerer Bereich B2 und zwei sich beidseitig an den mittleren Bereich B2 unmittelbar anschließende Endbereiche B1, B3. Erfindungsgemäß wird die polymere Masse M in den mittleren Bereich B2 der Kavität 13 des Formwerkzeugs 5 eingespritzt.

Über die axiale Länge L der Innenwandung 15 des Formwerkzeugs 5 hinweg können mehrere Befüllungs-Steuerungselemente 16 angeordnet sein, so dass im Querschnitt des Formwerkzeugs 5 exakt kreisförmige Bereiche und Bereiche mit einer von einer regelmäßigen Kreisform abweichenden Gestalt alternieren, wodurch es beim Spritzgießen zu den gemäß Fig. 4a bis 4g miteinander abwechselnden Querschnittsformen des Steckverbinders 1 kommt. Dieser Formenwechsel ist grundsätzlich auch Fig. 2b sowie einem Vergleich von Fig. 3a und Fig. 3b entnehmbar.

Wie aus Fig. 3b und 4f zu erkennen ist, befindet sich auf einer erhabenen Fläche 17 im Mittelabschnitt A2 die Anspritzstelle 9 des Formteils 1a. Der halbseitig auf dieser Umfangsseite von der Grundform her quadratisch ausgebildete Mittelabschnitt A2 ist dabei durch einen halbseitigen asymmetrischen Rücksprung der Innenwandung 13 des Werkzeugs 5, welcher ein erstes Befüllungs-Steuerungselement 16 bildet, in seinem Volumen gegenüber dem Volumen bei Vorliegen einer Kreisringform vergrößert. Die Ecken E des Quadrates sind - wie insbesondere Fig. 4f zeigt - dabei für eine bessere spätere Entformbarkeit des Formteils 1a aus dem Werkzeug 5 vorzugsweise mit einer Abschrägung ES versehen. Der gegenüberliegende Bereich in der anderen Hälfte des Mittelabschnitts A2 verläuft zentral- bzw. rotationssymmetrisch zur Längsachse X-X und ist kreisringförmig ausgebildet. Durch die Festlegung der durch die Abschrägung ES abgeschnittenen Ecken E kann das Volumen- bzw. Masseverhältnis in den beiden Hälften des asymmetrischen Querschnitts Q bei der Herstellung des Formwerkzeugs 5 voreingestellt werden, insofern sich die volumenvergrößernde Querschnittsform mit zunehmender Größe der abgeschnittenen Ecken E immer mehr wieder einer Kreisringform annähert.

Dieses erste Befüllungs-Steuerungselement 16 wird als erste asymmetrische Fließbremse 16a bezeichnet. Durch die Wirkung dieser Fließbremse 16a und insbesondere auch dadurch, dass gegenüber der Einspritzstelle 9 eine geringere mittlere Wandstärke erzeugt wird als auf der Einspritzseite, erfolgt eine schnelle Rundumausbildung des Mittelabschnitts A2.

Durch die Volumenvergößerung auf der Einspritzseite kann einerseits mit Vorteil die Wirksamkeit eines nach Beendigung der Füllung der Kavität 13 aufgebrachten Nachdrucks nicht nur grundsätzlich gewährleistet, sondern sogar gegenüber einer Ausbildung mit der herkömmlichen Kreisringform gesteigert werden, was zu einer verminderten Schrumpfung bei Abkühlen des Formteils 1a führt.

Des Weiteren führt das vergrößerte Volumen in den abgeschrägten Ecken E des Quadrates zusammen mit einer Volumenverringerung in der Kavität 13 durch eine im Steckabschnitt A1 hinter einem Rundumflansch 18 liegenden Ringnut 19 für einen O-Ring dazu, dass bei der Befüllung der Kavität 13 der Fluss der polymeren Masse M in axialer Richtung X-X gehemmt wird. Der Schnitt in Fig. 4e verläuft durch diese Ringnut 19. Beim Spitzgießen wird die Nut 19 durch einen umlaufenden rotationssymmetrisch ausgebildeten Vorsprung 16b in der Innenwandung 13 des Werkzeugs 5 gebildet, der somit als ein weiteres Befüllungs-Steuerungselement 16 anzusehen ist. Die polymere Masse M fließt dadurch, dass sie durch den Vorsprung 16b am Weiterfließen gehindert wird, in den in Flussrichtung davorliegenden Raum zur Ausbildung des Rundumflansches 18, welcher den größten Außendurchmesser des gesamten Formteils 1a aufweist.

Auf die gleiche Art und Weise wie die Ringnut 19 wirkt sich beim Spritzgießvorgang auch die Ausbildung der Durchmessereinschnürung 16c in der Kavität zur Ausbildung des Übergangs des Formteils 1a vom Mittelbereich A2 zum Anschlussbereich A3 aus. Hierzu ist ebenfalls ein umlaufender rotationssymmetrisch ausgebildeter Vorsprung in der Innenwandung 13 des Werkzeugs 5 vorgesehen, der dazu beiträgt, dass es im Mittelbereich A2 schnell zu einer vollständigen umfänglichen Füllung kommt und der somit als ein drittes Befüllungs-Steuerungselement 16 anzusehen ist.

Noch verbleibende Rest-Ungleichmäßigkeiten des späteren Verzugs des Formteils 1a, die durch einen zu schnellen axialen Massefluss im Vergleich zur Umfangsströmgeschwindigkeit der polymeren Masse M verursacht werden, können am Dornprofil ohne Weiteres akzeptiert werden, im Steckabschnitt A1 hingegen empfiehlt es sich, auch diese zu beseitigen. Zu diesem Zweck ist ein weiteres Befüllungs-Steuerungselement 16 vorgesehen, das durch eine in der Kavität 13 des Formwerkzeugs 5 gebildete weitere asymmetrische Kontur der Innenwandung 15 gebildet ist und so umfangsgemäß um den Kern 14 herum eine radial asymmetrische Verteilung der polymeren Masse M erzeugt, wobei es ebenfalls den Massestrom in axialer Richtung verzögert. Dieses vierte Befüllungs-Steuerungselement 16 wird als zweite asymmetrische Fließbremse 16d bezeichnet. Die zweite asymmetrische Fließbremse 16d führt dazu, dass im Formteil 1a auf der Seite der Anspritzung 9 ein einseitig vergrößertes Zusatzvolumen 20 implementiert wird, das als Ausgleichsvolumen für ein gegenüber liegendes Volumen 21 dient. Beide Volumina entstehen durch eine sich über einen axialen Längenbereich im Steckabschnitt A1 erstreckende, von der Grundgestalt her kreisringförmige Ausbildung im Querschnitt Q, wobei die Ringbreite s₁ des vergrößerten Zusatzvolumens 20 größer ist als die Ringbreite s₂ des gegenüber liegenden Volumens 21. Damit die Halbringe bündig an der Stelle ihres Zusammentreffens zueinander passen, sind ihre jeweiligen Außenradien geringfügig deformiert. Diese geometrische Asymmetrie führt zu einem gleichmäßigen axialen Quellfluss der Masse M.

Um ein Kollabieren der Masse M im Bereich der zweiten asymmetrischen Fließbremse 16d bei der späteren, unter Schrumpfung verlaufenden Abkühlung des Formteils 1a zu verhindern, umfasst das Formteil 1a auf der Seite des geringeren Volumens Stabilisierungsrippen 22. Diese ragen über die axiale Länge der Masseasymmetrie 20/21 sekantenartig vom Außenumfang des Halbringes mit der geringeren Breite s₂ ab. Des Weiteren weist der Halbring mit der größeren Ringbreite s₁ eine formstabilisierend wirkende, umfangsgemäß verlaufende, in der - in Fig. 3a dargestellten - Draufsicht V-förmig ausgebildete Einkerbung 23 auf.

Um eine größtmögliche Geradheit der realen Längsachse X`-X` des Formteils 1a zu erreichen, die sich auch darin ausdrückt, dass die Stirnfläche 24 des erfindungsgemäßen Steckverbinders 1 im Steckabschnitt A1, und insbesondere auch eine dort im Spitzenbereich befindliche Rastfläche 25 einer Rastnut 26 für ein nicht dargestelltes Rastelement, insbesondere ein Doppelrastelement, rechtwinklig zur geforderten Achsausbildung X-X steht, kann bevorzugt verfahrensgemäß eine letzte Optimierung mittels des Volumens des Formteils 1 durchgeführt werden. Ein Schnitt durch die Rastnut 26, die mittig, entsprechend der aus der WO 2010/006838 A1 bekannten speziellen Ausbildung einen umfangsgemäßen Wulst 27 enthält, welcher ein Verkippen des Steckerteils 1 beim Einstecken verhindert, ist in Fig. 4a dargestellt. Der Schnitt - in Fig. 3a mit A-A bezeichnet - verläuft durch die in Fig 3a oberhalb dieses Wulstes 27 liegende Nut.

Die Rechtwinkligkeit der Rastfläche 25 zur Steckachse, die identisch mit der Längsachse X-X des Steckerteils 1 ist, garantiert bei einer späteren Montage, dass das Einstecken des Steckerteils 1 in eine Aufnahmeöffnung eines Gehäuseteils ungehindert verläuft. Durch die Rechtwinkligkeit der Ausbildung der Rastnut 26 werden nach der Montage auch die Haltekräfte gleichmäßiger eingeleitet und es kann eine größere Haltekraft bzw. eine höhere Berstdruckstabilität erreicht werden.

Zur Feineinstellung der Geradheit der Achse X-X wird dabei ausgenutzt, dass es für ein Steckerteil 1 üblich sein kann, dieses auf dem Außenumfang mit Produktionsdatumskennzeichnungen zu versehen. Dazu taucht ein von der Innenwandung 15 ausgehender Prägestift radial in die Kavität 13 ein, wodurch eine ringförmige Abplattung auf dem Umfang des Formteils 1a entsteht, auf der das entsprechende Datum zu sehen ist. Aus einem Paar von zwei umfangsgemäß diametral einander gegenüberliegenden Prägestiften, die Abplattungen 28a, 28b mit jeweils unterschiedlicher, einstellbarer Tiefe t₁, t₂ - und damit eine Asymmetrie - erzeugen, ist so als dritte asymmetrische Fließbremse 16e bevorzugt ein fünftes Befüllungs-Steuerungselement 16 gebildet. Die Prägestifte sind in Fig. 6, welche das Werkzeug 5 zeigt, nicht dargestellt. In Fig. 4b, welche das Paar der Abplattungen 28a, 28b mit ihrer jeweils unterschiedlichen Tiefe t₁, t₂ zeigt, sind diese jedoch mit der Kennzeichnung "durch 16e" versehen, was auf ihre Erzeugung durch das fünfte Befüllungs-Steuerungselement 16 hinweist.

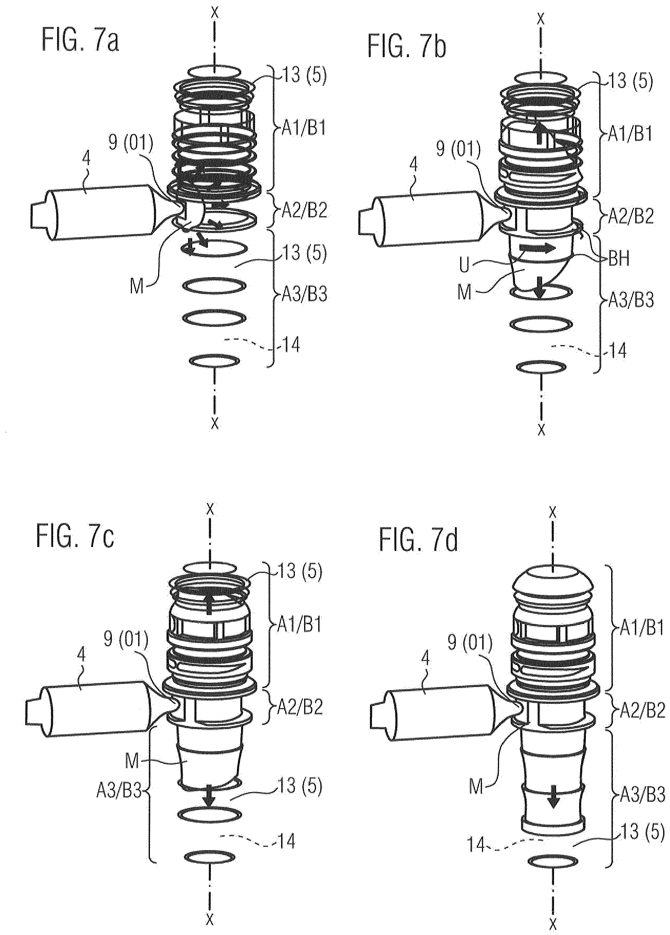

Die Figurenfolge Fig. 7a bis Fig. 7d veranschaulicht in schematisierter Darstellung die Füllung der Kavität 13 des Formwerkzeugs 5, wobei zum Zweck der Visualisierung des Strömungsverhaltens der polymeren Masse M willkürlich verschiedene Phasen des erfindungsgemäßen Verfahrens zur Herstellung des erfindungsgemäßen Steckverbinders 1 aus dem Gesamtablauf herausgegriffen sind. In der Figurenfolge sind im Sinne einer besseren Übersichtlichkeit nicht alle Teile, insbesondere nicht die Befüllungs-Steuerungselemente 16, mit den Bezugszeichen aus den anderen Figuren bezeichnet. Hierzu wird auf Fig. 2b, Fig. 3a, Fig. 3b, Fig. 4a bis 4g und Fig. 6 verwiesen.

Fig. 7a zeigt zunächst einen Zustand unmittelbar nach dem Eintritt der Masse M in die Kavität 13. Die polymere Masse beginnt die Kavität 13 zu füllen, indem sie an der Einspritzstelle 9 aus der Einspritzöffnung O1 heraus in alle, in der Zeichnung durch die Pfeile angedeuteten Richtungen fließt, insbesondere gleichzeitig beidseitig mit gleicher Geschwindigkeit in axialer Richtung X-X des sich ausbildenden Formteils 1a und beidseitig mit gleicher Geschwindigkeit in umfangsgemäßer Richtung um den Kern 14. Die nicht dargestellten Befüllungs-Steuerungselemente 16 bewirken mit Vorteil bei der Befüllung der Kavität 13, dass der Fluss der polymeren Masse in axialer Richtung X-X gehemmt wird und/oder dass umfangsgemäß um den Kern 14 herum eine radial asymmetrische Verteilung der polymeren Masse M entsteht. Die polymere Masse M breitet sich infolgedessen bei der Befüllung der Kavität 13 in umfangsgemäßer Richtung (Pfeil U in Fig. 7b) mit höherer Geschwindigkeit aus als in axialer Richtung X-X. Dadurch wird beim späteren Abkühlen ein Schrumpfverhalten des Formteils eingestellt, durch das ein Achsverzug ±ΔX extremal minimiert wird.

Fig. 7b zeigt einen Zustand, nachdem die Masse M auf der der Einspritzseite gegenüberliegenden Seite in der Kavität 13 unter Bildung einer Bindenaht BN umfangsgemäß zusammengeflossen ist. Durch die Verzögerung der Masseausbreitung in axialer Richtung X-X erfolgt mit Vorteil eine Minimierung der axialen Länge der Bindenaht BN. Ausgehend von dem mittleren Bereich B2 der Kavität 13 des Formwerkzeugs 5 sind dabei die beiden sich beidseitig an den mittleren Bereich B2 unmittelbar anschließenden Endbereiche B1, B3 noch nicht vollständig mit der Masse gefüllt. Der zur Ausbildung des Steckbereiches A1 bestimmte Endbereich B1 ist etwas mehr als zur Hälfte befüllt, der zur Ausbildung des Anschlussbereiches A2 bestimmte Endbereich B2 etwas weniger als zur Hälfte.

Fig. 7c zeigt einen Zustand, in dem die Masse M nach ihrem umfangsgemäßen Zusammenfließen sich nur noch in axialer Richtung X-X bewegt. Dieses Fließverhalten wird als Extrusion bezeichnet und gleicht weitestgehend dem, welches bei der Herstellung eines Rohres auftritt, wobei eine Masse in axialer Richtung in eine Form eingespritzt wird. Dieses Fließverhalten ist im Hinblick auf eine spätere verzugsfreie Schrumpfung des Formteils 1a äußerst vorteilhaft. Je nach den Längenverhältnissen der Abschnitte A1, A2, A3 bzw. B1, B2, B3 zueinander kann mittels der Befüllungs-Steuerungselemente 16 mit Vorteil erreicht werden, dass von einem Volumen der Kavität 13, welches durch eine Länge zwischen der Einspritzöffnung O1 der polymeren Masse M einerseits und einem die axiale Ausdehnung der Kavität 13 begrenzenden Ende der Innenwandung 15 des Formwerkzeugs 5 andererseits bestimmt ist, mindestens 20 Prozent, vorzugsweise mindestens 40 Prozent, besonders bevorzugt mindestens 60 Prozent, ausschließlich mittels Extrusion der polymeren Masse M durch den Raum befüllt wird, der zwischen der Innenwandung 15 des Formwerkzeugs 5 und dem darin angeordneten Kern 14 gebildet ist.

Fig. 7d zeigt einen Zustand kurz vor Beendigung des Einspritzens der polymeren Masse M. Der Steckabschnitt des Formteils ist bereits vollständig ausgebildet, während die Masse M durch Extrusion einen letzten Abschnitt des Dornteils füllt.

Durch mindestens ein Befüllungs-Steuerungselement 16, insbesondere eines oder mehrerer Befüllungs-Steuerungselemente 16 in einer der verschiedenen als bevorzugt beschriebenen Ausführungsformen 16a, 16b, 16c, 16d, 16e, kann erfindungsgemäß erreicht werden, dass das ganze Material für bekanntermaßen vorhandene Angüsse 12* eingespart wird und dass in einer bestimmten Zeit eine - verglichen mit dem Stand der Technik - größere Anzahl von Steckverbindern 1 hergestellt werden kann, wobei die insbesondere für Schnellverbinder notwendige axiale Geradheit des Formteils 1a eingehalten wird.

Anstelle der unter Bezugnahme auf Fig. 5 erläuterten, über die Achslänge positiven Abweichungen +ΔX und negativen Abweichungen -ΔX, aus denen dann der größte Absolutwert ΔX ermittelt wird, können auch prozentuale, auf die Länge L des Formteils 1a bezogene Abweichungen ΔX / L * 100 % angegeben werden. Hierbei können erfindungsgemäß Werte kleiner als 7 %, insbesondere kleiner als 2 %, bevorzugt kleiner als 1 %, besonders bevorzugt kleiner als 0,5 %, erreicht werden.

### Bezugszeichenliste

- 1: Steckverbinder, erfindungsgemäß
- 1*: Steckverbinder, bekannt
- 1a: Formteil, erfindungsgemäß
- 1a*: Formteil, bekannt
- 2: Innenkanal von 1
- 2*: Innenkanal von 1*
- 3: Dorn in A3
- 3*: Dorn in A3*
- 4: Heißkanaldüse, Nadel-Verschlussdüse
- 4*: Heißkanaldüse, offene Düse
- 5: Werkzeug zur Herstellung von 1/1a
- 5*: Werkzeug zur Herstellung von 1*/1a*
- 6: Düsenkern von 4
- 6A: Düsenkörper von 4
- 6*: Düsenkörper von 4*
- 7: Isolierschicht von 4
- 8: Verschlussnadel von 4
- 9: Anspritzstelle, Markierung auf 1/1a
- 10*: Unterverteiler für M*
- 11*: Kanal in 5*
- 12*: Anguss an 1a*
- 13: Kavität von 5
- 14: Kern in 13
- 15: Innenwandung von 13

- 16: Befüllungs-Steuerungselement (allgemein) von 5
- 16a: erste asymmetrische Fließbremse (Ausführungsform von 16)
- 16b: radialer Vorsprung in B2 von 13 (Ausführungsform von 16) zur Ausbildung von 18
- 16c: Durchmessereinschnürung in B3 von 13 (Ausführungsform von 16)
- 16d: zweite asymmetrische Fließbremse (Ausführungsform von 16)
- 16e: dritte asymmetrische Fließbremse (Ausführungsform von 16)
- 17: erhabenen Fläche in A2 mit 9
- 18: Rundumflansch in A2
- 19: Ringnut in A1
- 20: Zusatzvolumen in A1, halbseitig neben 21, größer als 21
- 21: Volumen in A1, halbseitig neben 20, kleiner als 20
- 22: Stabilisierungsrippe an 21
- 23: Einkerbung in 20
- 24: Stirnfläche von 1 in A1
- 24*: Stirnfläche von 1* in A1*
- 25: Rastfläche von 1 in A1 in 26
- 25*: Rastfläche von 1* in A1* in 26*
- 26: Rastnut von 1 in A1, mit 26 und 27
- 26*: Rastnut von 1* in A1*, mit 26*
- 27: Wulst in 26
- 28a/28b: Abplattungspaar in A1
- A1: erster axialer Hauptabschnitt von 1/1a, Steckabschnitt
- A1*: erster axialer Hauptabschnitt von 1*/1a*, Steckabschnitt
- A2: zweiter axialer Hauptabschnitt von 1/1a, Mittelabschnitt
- A2*: zweiter axialer Hauptabschnitt von 1*/1a*, Mittelabschnitt
- A3: dritter axialer Hauptabschnitt von 1/1a, Anschlussabschnitt
- A3*: dritter axialer Hauptabschnitt von 1*/1a*, Anschlussabschnitt

- M: polymere Masse zur Herstellung von 1/1a
- M*: polymere Masse zur Herstellung von 1*/1a*
- O1: Einspritzöffnung für M von 4
- Q: Querschnitt von 1/1a
- s₁: Breite von 20
- s₂: Breite von 21
- t₁: Tiefe von 28a
- t₂: Tiefe von 28b
- U: Umfangsrichtung (Fig. 7b)
- X-X: Längsachse von 1/1a, 5, gefordert
- X*-X*: Längsachse von 1*/1a*, 5
- X'-X': Längsachse von 1/1a, 5, real (Fig. 5)
- ΔX: größter Absolutwert aus +ΔX, -ΔX
- +ΔX: positiven Abweichungen zwischen X-X und X`-X`
- -ΔX: negative Abweichungen zwischen X-X und X'-X'

## Patentansprüche

1. Steckverbinder (1), ausgebildet als ein aus Kunststoff bestehendes, durch Spritzgießen hergestelltes Formteil (1a), mit einem Innenkanal (2) für ein Fluid und mit einem mindestens teilweise ringförmigen Querschnitt (Q) sowie mit drei axial hintereinander liegenden Hauptabschnitten (A1, A2, A3), und zwar mit einem Mittelabschnitt (A2) und mit zwei beidseitig an den Mittelabschnitt (A2) angrenzenden Verbindungsabschnitten (A1, A3), wobei mindestens einer der Verbindungsabschnitte (A1) ein Steckabschnitt (A1) oder ein Anschlussabschnitt mit einem Dornteil ist, wobei der andere Verbindungsabschnitt (A3) ebenfalls als Steckabschnitt oder als Anschlussabschnitt mit einem Dornteil oder als Schraubteil mit einem Innen- oder Außengewinde ausgebildet ist,
**dadurch gekennzeichnet, dass** das Formteil (1a) ausschließlich einseitig auf seinem Außenumfang eine Anspritzstelle (9) aufweist, wobei in mindestens einem der Hauptabschnitte (A1, A2, A3) des Formteils (1a) eine umfangsgemäß radial asymmetrische Masseverteilung des Kunststoffs vorliegt, wobei das Formteil (1a) die Anspritzstelle (9) und die radial asymmetrische Masseverteilung des Kunststoffs im Mittelabschnitt (A2) aufweist.

2. Steckverbinder (1) nach Anspruch 1,
**dadurch gekennzeichnet, dass** das Formteil (1a) aus einem thermoplastischen Werkstoff, wie aus Polyamid, insbesondere aus dem Werkstoff PA 6, PA11, PA12 oder PA 66, hergestellt ist, wobei der Werkstoff - bezogen auf seine Gesamtmasse - einen Füllstoffgehalt, insbesondere einen Fasergehalt, im Bereich von 0 bis 60 Prozent, vorzugsweise im Bereich von 20 bis 40 Prozent, aufweist.

3. Steckverbinder (1) nach Anspruch 1 oder 2,
**dadurch gekennzeichnet, dass** das Formteil (1a) Glasfasern mit einer Länge im Bereich von 0,1 mm bis 10 mm, vorzugsweise im Bereich von 0,2 mm bis 0,5 mm, und mit einem mittleren Durchmesser im Bereich von etwa 3 µm bis 35 µm, vorzugsweise im Bereich von 5 µm bis 20 µm, enthält.

4. Steckverbinder (1) nach einem der Ansprüche 1 bis 3,
**dadurch gekennzeichnet, dass** das Formteil (1a) einen Masseschwerpunkt aufweist, der asymmetrisch zur Mittenachse (X-X) des Formteils (1a) liegt, insbesondere auf der Seite der Einspritzstelle (9) oder auf der der Seite der Einspritzstelle (9) gegenüber liegenden Seite oder auch um 90° versetzt zur Einspritzstelle (9).

5. Steckverbinder (1) nach einem der Ansprüche 1 bis 4,
**dadurch gekennzeichnet, dass** eine maximale, prozentual auf die Länge (L) des Formteils (1a) bezogene Abweichung des Formteils (1a) kleiner ist als 7 %, insbesondere kleiner als 2 %, bevorzugt kleiner als 1 %, besonders bevorzugt kleiner als 0,5 %.

6. Verfahren zur Herstellung eines Steckverbinders (1) nach dem Oberbegriff des Anspruchs 1, insbesondere nach einem der Ansprüche 1 bis 5, wobei der Steckverbinder (1) als Formteil (1a) durch Spritzgießen aus einem plastifizierten Kunststoff hergestellt wird, der als polymere Masse (M) unter Druck radial nach innen in eine durch eine Innenwandung (15) eines Formwerkzeugs (5) gebildete Kavität (13) eingespritzt wird, wobei in der Kavität (13) zur Bildung eines Innenkanals (2) des Steckverbinders (1) ein einziger zylindrischer rotationssymmetrischer Kern (14) angeordnet ist, um den herum die polymere Masse (M) in umfangsgemäßer und in axialer Richtung fließt, bis die Kavität (13) vollständig gefüllt ist, wonach die polymere Masse (M), gegebenenfalls unter Aufbringung eines Nachdrucks, bis zum Erstarren abkühlt, und wobei danach das Formteil (1a) aus dem Formwerkzeug (5) entformt wird,
**dadurch gekennzeichnet, dass** die polymere Masse (M) ausschließlich einseitig durch eine einzige Einspritzöffnung (O1) eingespritzt wird, wobei in mindestens einem der Bereiche (B1, B2, B3) der axialen Länge (L) des Formwerkzeugs (5) an der Innenwandung (15) ein Befüllungs-Steuerungselement (16) angeordnet ist, welches bei der Befüllung der Kavität (13) den Fluss der polymeren Masse (M) in axialer Richtung (X-X) hemmt und/oder umfangsgemäß um den Kern (14) herum eine radial asymmetrische Verteilung der polymeren Masse (M) erzeugt, wobei die polymere Masse (M) in einen mittleren Bereich (B2) der Kavität (13) des Formwerkzeugs (5) eingespritzt wird und ein oder mehr Befüllungs-Steuerungselement(e) (16) in einem mittleren Bereich der Kavität (13) des Formwerkzeugs (5) angeordnet ist/sind.

7. Verfahren nach Anspruch 6,
**dadurch gekennzeichnet, dass** über die axiale Länge (L) der Innenwandung (15) des Formwerkzeugs (5) hinweg mehrere Befüllungs-Steuerungselemente (16) angeordnet sind, wodurch über die axiale Länge (L) der Innenwandung (15) des Formwerkzeugs (5) hinweg im Querschnitt exakt kreisförmige Bereiche und Bereiche mit einer von einer regelmäßigen Kreisform abweichenden Gestalt miteinander abwechseln.

8. Verfahren nach einem der Ansprüche 6 oder 7,
**dadurch gekennzeichnet, dass** die polymere Masse (M) sich bei der Befüllung der Kavität (13) in umfangsgemäßer Richtung mit höherer Geschwindigkeit ausbreitet als in axialer Richtung (X-X).

9. Verfahren nach einem der Ansprüche 6 bis 8,
**dadurch gekennzeichnet, dass** das ein oder mehr Befüllungs-Steuerungselement(e) (16) in mindestens einem von zwei sich beidseitig an den mittleren Bereich (B2) unmittelbar anschließenden Endbereichen (B1, B3) der Kavität (13) des Formwerkzeugs (5) angeordnet ist/sind.

10. Verfahren nach einem der Ansprüche 6 bis 9,
**dadurch gekennzeichnet, dass** das/die Befüllungs-Steuerungselement(e) (16) durch umlaufende oder einseitige, symmetrische oder asymmetrische Vorsprünge oder Rücksprünge (16a, 16b, 16c, 16d, 16e) in der Innenwandung (13) des Werkzeugs (5) gebildet ist/sind.

11. Verfahren nach einem der Ansprüche 6 bis 10,
**dadurch gekennzeichnet, dass ein** Befüllungs-Steuerungselement (16) durch mindestens ein Paar (28a/28b) von einander umfangsgemäß diametral gegenüber liegenden Abplattungen (28a, 28b) unterschiedlicher Tiefe (t₁, t₂) gebildet ist.

12. Verfahren nach einem der Ansprüche 6 bis 11,
**dadurch gekennzeichnet, dass** von einem Volumen der Kavität (13), welches durch eine Länge zwischen der Einspritzöffnung (O1) der polymeren Masse (M) und einem die axiale Ausdehnung der Kavität (13) begrenzenden Ende der Innenwandung (15) des Formwerkzeugs (5) bestimmt ist, mindestens 20 Prozent, vorzugsweise mindestens 40 Prozent, besonders bevorzugt mindestens 60 Prozent, ausschließlich mittels Extrusion der polymeren Masse (M) durch den Raum befüllt wird, der zwischen der Innenwandung (15) des Formwerkzeugs (5) und dem darin angeordneten Kern (14) gebildet ist.

13. Verfahren nach einem der Ansprüche 6 bis 12,
**dadurch gekennzeichnet, dass** zum Einspritzen der polymeren Masse (M) eine Nadelverschluss-Düse (4) eingesetzt wird.

## Claims

1. A plug-in connector (1), formed as a molded part (1a) composed of plastic and produced by injection molding, having an inner channel (2) for a fluid and having an at least partially annular cross section (Q) and having three main portions (A1, A2, A3) situated axially one behind the other, specifically with a central portion (A2) and with two connecting portions (A1, A3) adjoining the central portion (A2) at both sides, wherein at least one of the connecting portions (A1) is a plug-in portion (A1) or an attachment portion with a barbed part, wherein the other connecting portion (A3) is likewise formed as a plug-in portion or is formed as an attachment portion with a barbed part or as a screw part with an internal or external thread,
**characterized in that** the molded part (1a) has a gate point (9) exclusively at one side on its outer circumference, wherein a circumferentially radially asymmetrical mass distribution of the plastic is present in at least one of the main portions (A1, A2, A3) of the molded part (1a), wherein the molded part (1a) has the gate point (9) and the radially asymmetrical mass distribution of the plastic in the central portion (A2).

2. The plug-in connector (1) as claimed in claim 1,
**characterized in that** the molded part (1a) is produced from a thermoplastic material such as polyamide, in particular from the material PA 6, PA11, PA12 or PA 66, wherein the material - in relation to its total mass - has a filler content, in particular a fiber content, in the range from 0 to 60 percent, preferably in the range from 20 to 40 percent.

3. The plug-in connector (1) as claimed in claim 1 or 2,
**characterized in that** the molded part (1a) comprises glass fibers with a length in the range from 0.1 mm to 10 mm, preferably in the range from 0.2 mm to 0.5 mm, and with a mean diameter in the range from approximately 3 µm to 35 µm, preferably in the range from 5 µm to 20 µm.

4. The plug-in connector (1) as claimed in any of claims 1 to 3,
**characterized in that** the molded part (1a) has a center of mass which is situated asymmetrically with respect to the central axis (X-X) of the molded part (1a), in particular on the side of the gate point (9) or on the side situated opposite the side of the gate point (9) or else offset through 90° with respect to the gate point (9).

5. The plug-in connector (1) as claimed in any of claims 1 to 4,
**characterized in that** a maximum percentage deviation of the molded part (1a) with regard to the length (L) of the molded part (1a) is less than 7%, in particular less than 2%, preferably less than 1%, particular preferably less than 0.5%.

6. A method for producing a plug-in connector (1) as per the preamble of claim 1, in particular as claimed in any of claims 1 to 5, wherein the plug-in connector (1) is produced as a molded part (1a) by injection molding from a plasticized plastic, which is injected as a polymer compound (M) under pressure radially inward into a cavity (13) formed by an inner wall (15) of a molding tool (5), wherein, in the cavity (13), to form an inner channel (2) of the plug-in connector (1), there is arranged one single cylindrical rotationally symmetrical core (14) around which the polymer compound (M) flows in a circumferential and in an axial direction until the cavity (13) has been completely filled, following which the polymer compound (M) cools, possibly with application of a holding pressure, until it solidifies, and wherein the molded part (1a) is subsequently demolded from the molding tool (5), **characterized in that** the polymer compound (M) is injected exclusively at one side through a single injection opening (O1), wherein, in at least one of the regions (B1, B2, B3) of the axial length (L) of the molding tool (5), a filling control element (16) is arranged on the inner wall (15), which filling control element, during the filling of the cavity (13), inhibits the flow of the polymer compound (M) in an axial direction (X-X) and/or generates a radially asymmetrical distribution of the polymer compound (M) circumferentially around the core (14), wherein the polymer compound (M) is injected into a central region (B2) of the cavity (13) of the molding tool (5) and one or more filling control elements (16) is or are arranged in a central region of the cavity (13) of the molding tool (5).

7. The method as claimed in claim 6,
**characterized in that** multiple filling control elements (16) are arranged over the axial length (L) of the inner wall (15) of the molding tool (5), whereby regions which are exactly circular in cross section and regions with a shape which deviates from a regular circular shape alternate with one another over the axial length (L) of the inner wall (15) of the molding tool (5).

8. The method as claimed in any of claims 6 or 7,
**characterized in that** the polymer compound (M) propagates at a higher speed in a circumferential direction than in an axial direction (X-X) during the filling of the cavity (13).

9. The method as claimed in any of claims 6 to 8,
**characterized in that** the one or more filling control elements (16) is or are arranged in at least one of two end regions (B1, B3), which directly adjoin the central region (B2) at both sides, of the cavity (13) of the molding tool (5).

10. The method as claimed in any of claims 6 to 9,
**characterized in that** the filling control element(s) (16) is or are formed by encircling or unilateral, symmetrical or asymmetrical projections or recesses (16a, 16b, 16c, 16d, 16e) in the inner wall (13) of the tool (5).

11. The method as claimed in any of claims 6 to 10,
**characterized in that** a filling control element (16) is formed by at least one pair (28a/28b) of flattenings (28a, 28b) which are situated circumferentially diametrically opposite one another and which are of different depths (t₁, t₂).

12. The method as claimed in any of claims 6 to 11,
**characterized in that,** of a volume of the cavity (13) which is defined by a length between the injection opening (O1) of the polymer compound (M) and an end, which delimits the axial extent of the cavity (13), of the inner wall (15) of the molding tool (5), at least 20 percent, preferably at least 40 percent, particularly preferably at least 60 percent is filled exclusively by means of extrusion of the polymer compound (M) through the space that is formed between the inner wall (15) of the molding tool (5) and the core (14) arranged therein.

13. The method as claimed in any of claims 6 to 12,
**characterized in that** a needle closure nozzle (4) is used for the injection of the polymer compound (M).

## Revendications

1. Connecteur enfichable (1), conçu comme une pièce moulée (1a) en matière synthétique et réalisée par moulage par injection, ledit connecteur enfichable comprenant un conduit intérieur (2) destiné à un fluide et ayant une section transversale (Q) au moins partiellement annulaire et comprenant trois portions principales (A1, A2, A3) situées l'une derrière l'autre, à savoir avec une portion médiane (A2) et deux tronçons de liaison (A1, A3) adjacentes des deux côtés à la portion médiane (A2), au moins une des portions de liaison (A1) étant une portion enfichable (A1) ou une portion de raccordement pourvue d'une partie formant mandrin, l'autre portion de liaison (A3) étant également conçue comme une portion enfichable ou comme une portion de raccordement pourvue d'une partie formant mandrin ou comme une partie filetée pourvue d'un filetage intérieur ou extérieur,
**caractérisé en ce que** la pièce moulée (1a) comporte un point d'injection (9) exclusivement d'un côté sur sa circonférence extérieure, au moins une des portions principales (A1, A2, A3) de la pièce moulée (1a) présentant une répartition de matière synthétique circonférentiellement et radialement asymétrique du plastique, la pièce moulée (1a) comportant le point d'injection (9) et la répartition de matière synthétique radialement asymétrique dans la portions médiane (A2).

2. Connecteur enfichable (1) selon la revendication 1,
**caractérisé en ce que** la pièce moulée (1a) est réalisée à partir d'une matière thermoplastique, telle que du polyamide, notamment de matière PA6, PA11, PA12 ou PA66, la matière ayant une teneur en charge, en particulier une teneur en fibres, dans la gamme allant de 0 et 60 pour cent, de préférence dans la gamme allant de 20 à 40 pour cent, par rapport à sa masse totale.

3. Connecteur enfichable (1) selon la revendication 1 ou 2,
**caractérisé en ce que** la pièce moulée (1a) contient des fibres de verre d'une longueur dans la gamme allant de 0,1 mm à 10 mm, de préférence dans la gamme allant de 0,2 mm à 0,5 mm, et un diamètre moyen dans la gamme allant d'environ 3 µm à 35µm, de préférence dans la gamme allant de 5 µm à 20 µm.

4. Connecteur enfichable (1) selon l'une des revendications 1 à 3,
**caractérisé en ce que** la pièce moulée (1a) présente un centre de gravité qui est dissymétrique par rapport à l'axe médian (X-X) de la pièce moulée (1a), notamment du côté du point d'injection (9) ou du côté opposé au point d'injection (9) ou décalé de 90° par rapport au point d'injection (9).

5. Connecteur enfichable (1) selon l'une des revendications 1 à 4,
**caractérisé en ce qu'**un écart maximal en pourcentage de la pièce moulée (1a), par rapport à la longueur (L) de la pièce moulée (1a), est inférieur à 7 %, en particulier inférieur à 2 %, de préférence inférieur à 1 %, de manière particulièrement préférée inférieur à 0,5 %.

6. Procédé de fabrication d'un connecteur enfichable (1) selon le préambule de la revendication 1, notamment selon l'une des revendications 1 à 5, le connecteur enfichable (1) étant réalisé par moulage par injection à partir d'une matière synthétique plastifiée sous la forme d'une pièce moulée (1a) qui, en tant que matière polymère (M), est injectée sous pression radialement vers l'intérieur dans une cavité (13) formée par une paroi intérieure (15) d'un moule (5), un seul noyau cylindrique (14) à symétrie de rotation étant disposé dans la cavité (13) pour former un conduit intérieur (2) du connecteur enfichable (1), autour duquel la matière polymère (M) s'écoule dans les directions circonférentielle et axiale jusqu'à ce que la cavité (13) soit complètement remplie, après quoi la matière polymère (M) refroidit jusqu'à solidification, éventuellement avec maintien en pression, et la pièce moulée (1a) étant ensuite retirée du moule (5),
**caractérisé en ce que** la matière polymère (M) est injectée exclusivement d'un côté par une ouverture d'injection unique (01), un élément de commande de remplissage (16), qui lors du remplissage de la cavité (13) inhibe le flux de matière polymère (M) dans la direction axiale (X-X) et/ou réalise une répartition radialement asymétrique de la matière polymère (M) circonférentiellement autour du noyau (14), étant disposé dans au moins une des zones (B1, B2, B3) de la longueur axiale (L) du moule (5) au niveau de la paroi intérieure (15), la matière polymère (M) étant injectée dans une zone médiane (B2) de la cavité (13) du moule (5) et un ou plusieurs éléments de commande de remplissage (16) étant disposés dans une zone médiane de la cavité (13) du moule (5).

7. Procédé selon la revendication 6,
**caractérisé en ce que** plusieurs éléments de commande de remplissage (16) sont disposés sur la longueur axiale (L) de la paroi intérieure (15) du moule (5) de sorte que, sur la longueur axiale (L) de la paroi intérieure (15) du moule (5), des zones exactement circulaires en coupe transversale et des zones ayant une forme s'écartant d'une forme circulaire régulière alternent les unes avec les autres.

8. Procédé selon l'une des revendications 6 ou 7,
**caractérisé en ce que**, lors du remplissage de la cavité (13), la matière polymère (M) se propage à une vitesse plus élevée dans la direction circonférentielle que dans la direction axiale (X-X).

9. Procédé selon l'une des revendications 6 à 8,
**caractérisé en ce que** le ou les éléments de commande de remplissage (16) sont disposés dans au moins une de deux zones d'extrémité (B1, B3) de la cavité (13) du moule (5) qui est directement adjacente des deux côtés à la zone médiane (B2).

10. Procédé selon l'une des revendications 6 à 9,
**caractérisé en ce que** le ou les éléments de commande de remplissage (16) sont formés par des saillies ou des évidements (16a, 16b, 16c, 16d, 16e) périphériques ou unilatéraux, symétriques ou asymétriques, dans la paroi intérieure (13) de l'outil (5).

11. Procédé selon l'une des revendications 6 à 10,
**caractérisé en ce qu'**un élément de commande de remplissage (16) est formé par au moins une paire (28a/28b) de zones aplaties (28a, 28b) de profondeurs différentes (t₁, t₂) diamétralement opposées sur la circonférence.

12. Procédé selon l'une des revendications 6 à 11,
**caractérisé en ce qu'**un volume de la cavité (13), qui est défini par une longueur comprise entre l'ouverture d'injection (01) de la matière polymère (M) et une extrémité, définissant l'extension axiale de la cavité (13), de la paroi intérieure (15) du moule (5), est rempli à au moins 20 pour cent, de préférence au moins 40 pour cent, de manière particulièrement préférée au moins 60 pour cent, exclusivement par extrusion de la matière polymère (M) à travers l'espace qui est formé entre la paroi intérieure (15) du moule (5) et le noyau (14) disposé à l'intérieur.

13. Procédé selon l'une des revendications 6 à 12,
**caractérisé en ce qu'**une buse à obturation à aiguille (4) est utilisée pour injecter la matière polymère (M).
